# EUROPÄISCHE PATENTSCHRIFT

(11) **EP 3 078 638 B1**
(45) Veröffentlichungstag und Bekanntmachung des Hinweises auf die Patenterteilung: **01.05.2024**
(21) Anmeldenummer: 16159547.5
(22) Anmeldetag: 10.03.2016
(51) Int. Cl.: C02F 1/00, A47J 31/60

(54) **WASSERFILTERPATRONE UND WASSERTANK**
WATER FILTER CARTRIDGE AND WATER TANK
CARTOUCHE DE FILTRE A EAU ET RESERVOIR A EAU

(30) Priorität: 09.04.2015 DE 102015105403
(43) Veröffentlichungstag der Anmeldung: 12.10.2016
(73) Patentinhaber: ACLARIS Water Innovations GmbH Lindau, Zweigniederlassung Rebstein, 9445 Rebstein (CH)
(72) Erfinder: Wallerstorfer, Kurt, 5204 Strasswalchen (AT)
(74) Vertreter: Otten, Roth, Dobler & Partner mbB Patentanwälte

(56) Entgegenhaltungen:
- EP-A1- 1 834 927
- DE-A1-102006 029 105

## Beschreibung

Die Erfindung betrifft eine Wasserfilterpatrone, einen Wassertank und ein wasserführendes Gerät nach den Oberbegriffen der Ansprüche 1, 9 und 13. In Haushaltsgeräten mit Wassertank, beispielsweise Getränkemaschinen, wie Espressomaschinen oder dergleichen, werden vermehrt Wasserfilterpatronen eingesetzt, um das Wasser vor der eigentlichen Verwendung aufzubereiten. Derartige Filterpatronen sind zum Einsetzen in den Wassertank ausgebildet und zu diesem Zweck mit einem Anschlusselement zum Anschluss einer Filterablaufleitung an ein tankseitiges Anschlusselement versehen. Das Filtergehäuse wird mit permanent offenen Eintrittsöffnungen für den Eintritt von Wasser aus der Umgebung, das heißt aus dem Wassertank versehen, sodass der Wassertank über die Filterpatrone entleerbar ist. Das Wasser wird dabei über eine Saugpumpe des Haushaltsgeräts über die Filterpatrone abgesaugt.

Zur Vermeidung des Einsatzes eines ungeeigneten Filtertyps oder auch zur Erkennung einer erschöpften Filterpatrone wurde bei einer solchen Filterpatrone zusätzlich der Einsatz eines elektronischen Kommunikationselementes bekannt. Eine solche Filterpatrone wird in der Druckschrift DE 10 2006 029 105 A1 beschrieben.

Bei diesem Stand der Technik wird bereits erkannt, dass bei der Transmission elektromagnetischer Wellen durch Wasser eine Frequenzverstimmung eintreten kann. Deshalb wird beim Stand der Technik für diesen Fall bei der Fertigung bzw. der Einstellung der Sende- und/oder Empfangsfrequenzen eine gezielte Verstimmung zwischen dem filterpatronenseitigen Kommunikationselement und dem externen Kommunikationselement, das auf Seiten des Haushaltsgerätes angeordnet ist, vorgesehen, um eine solche Frequenzverstimmung zu kompensieren.

Die DE 10 2014 117 725 A1, DE 10 2006 029 105 A1 und die DE 10 2014 117 720 A1 offenbaren eine Getränkemaschine und einen daran anschließbaren Wasservorratstank bzw. eine Wasserfilterpatrone zum Einsetzen in einen solchen Wasservorratstank, die jeweils mittels elektronischen Kommunikationselementen mit Antennen kommunizieren.

Aufgabe der vorliegenden Erfindung ist es, die Kommunikation zwischen solchen elektronischen Kommunikationselementen zu verbessern.

Diese Aufgabe wird, ausgehend von den Oberbegriffen der Ansprüche 1, 9 und 13 durch deren kennzeichnenden Merkmale gelöst. Durch die in den Unteransprüchen genannten Maßnahmen sind vorteilhafte Ausführungen und Weiterbildungen der Erfindung möglich.

Dementsprechend umfasst eine Wasserfilterpatrone für den Einsatz in einem Wasservorratstank eines wasserführenden Gerätes ein Filtergehäuse, ein filterseitiges Tankanschlusselement und ein elektronisches Kommunikationselement mit Antenne sowie mindestens ein Magnetfeldleitelement.

Bevorzugt kann ein solches Magnetfeldleitelement magnetische Materialien mit einer Permeabilitätszahl aufweisen, die wesentlich größer 1 ist (µᵣ » 1). Entsprechend des strukturellen Verlaufs und/oder der Anordnung eines derart ausgebildeten Magnetfeldleitelementes ist eine Einflussnahme auf magnetische Feldlinien möglich. Durch die wesentlich höhere Leitfähigkeit in dem magnetfeldleitenden Element im Vergleich zu dessen Umgebung, wie z. B. Luft und/oder Kunststoff, woraus üblicherweise Filtergehäuse und deren mechanische Komponenten gefertigt sind, wird eine Konzentration oder Bündelung von magnetischen Feldlinien in das Innere und/oder in die Nähe eines solchen Magnetfeldleitelementes bewirkt.

Durch eine Anordnung und/oder Ausrichtung eines Magnetfeldleitelementes in Bezug auf eine Antenne eines elektronischen Kommunikationselementes kann ein wesentlicher Anteil eines auftretenden Magnetfeldes gezielt in dessen Richtung gelenkt werden. Insbesondere vorteilhaft ist es, wenn das Magnetfeldleitelement in einem Bereich zwischen zwei Antennen angeordnet ist, z. B. zwischen einer Antenne eines sendenden elektronischen Kommunikationselementes und einer Antenne eines im Empfangsmodus betriebenen elektronischen Kommunikationselementes. In einer möglichen Ausführungsform kann daher das Magnetfeldleitelement in einem Bereich der Wasserfilterpatrone angeordnet sein, der sich zwischen der Antenne des filterseitigen elektronischen Kommunikationselementes und einer Stelle an der Wasserfilterpatrone befindet, welche Stelle bei eingesetztem Zustand der Wasserfilterpatrone in Richtung der Antenne eines komplementären, zur Kommunikation mit dem filterseitigen Kommunikationselement vorgesehenen tankseitigen Kommunikationselement und/oder geräteseitigem Kommunikationselement weist.

Durch die Konzentration oder Bündelung des Magnetfeldes ergeben sich auch lokale Verstärkungseffekte für das Magnetfeld. Durch den Verstärkungseffekt des Magnetfeldleitelementes anhand der Feldlinienkonzentration kann in vorteilhafter Weise eine massive Pegelerhöhung und damit eine deutlich verbesserte Datenübertragung zwischen den beiden elektronischen Kommunikationselementen erfolgen. Bei vergleichsweise gleicher Sendeleistung kann dadurch ein wesentlich höheres Empfangssignal an der empfangenden Antenne eingespeist werden. Gleichzeitig wird eine störende, magnetische Strahlung nach außen in entsprechendem Maße reduziert. Störungen von außen können wiederum aufgrund des wesentlich höheren internen Systempegels deutlich besser herausgefiltert werden.

Andererseits kann vergleichsweise die gleiche Empfangspegelstärke mittels eines Magnetfeldleitelementes bei wesentlich reduzierter Sendeleistung aufgrund der Feldkonzentration in der bevorzugten Übertragungsrichtung zwischen beteiligten Antennen bewirkt werden.

Die Form eines solchen Magnetfeldleitelementes kann beispielsweise ringförmig, stiftförmig, fadenförmig oder dergleichen sein. In den letzteren Fällen ist es vorteilhaft, wenn mehrere solcher Elemente angeordnet sind, z. B., im Querschnitt betrachtet, wenigstens teilweise ringartig verteilt angeordnet. Durch eine derart ringförmig ausgebildete und/oder angeordnete Struktur eines oder mehrerer Magnetfeldleitelemente kann eine Art Käfig ausgebildet werden. Der Vorteil eines solchen Käfigs liegt in einer, im Querschnitt betrachtet, ringförmig verteilten, lokal stark verbesserten Führung bzw. Konzentration magnetischer Feldlinien, entlang eines derart gebildeten Käfigs. Ein solcher Käfig kann beispielsweise aus mehreren Stiften, Fäden oder dergleichen und/oder auch Kombinationen solcher länglichen Strukturen gebildet sein. Je geschlossener der Käfig ist, desto besser ist die damit erzielbare Wirkung auf magnetische Feldlinien zwischen korrespondierenden Antennen. Hier vorliegend z. B. zwischen der Antenne des filterseitigen Kommunikationselementes und einer Antenne eines komplementären, geräteseitigen Kommunikationselementes und/oder einer Antenne eines gegebenenfalls an einem Wassertank vorgesehenen, tankseitigen Kommunikationselementes.

Besonders bevorzugt wird eine hülsenförmige, d. h. ringförmige Ausführungsform mit gewisser axialer Länge angesehen. Damit kann eine möglichst gleichmäßige Einflussnahme auf den Feldverlauf in Bezug auf eine im Querschnitt betrachtete Ausführungsform bewirkt werden. Dies um so besser, je geschlossener der Mantel der Hülse ausgebildet ist.

Anhand einer in der Magnetfeldleitelementstruktur ausgebildeten Unterbrechung kann eine Variierung in der Hülsenform ermöglicht werden. So kann z.B. durch eine Dehnung und/oder Stauchung ein Anbringen an der Wasserfilterpatrone erleichtert werden. Mittels eines oder mehrerer Schlitze in der Magnetfeldleitelementstruktur kann beispielsweise eine radiale und/oder axiale Verformung unterstützt und/oder ermöglicht werden. Mögliche Schlitzformen können axial und/oder quer zur Längserstreckung und/oder kombiniert ausgebildet sein, z.B. in Bezug auf die Längsachse des Magnetfeldleitelementes.

Durch eine Überlappung von Mantelabschnitten des Magnetfeldleitelementes und/oder mehrerer Magnetfeldleitelemente kann dessen bzw. deren Magnetfeld leitende Eigenschaft auch bei einer Veränderung des Umfangs und/oder der Längserstreckung des Magnetfeldleitelementes eine weiterhin geschlossene Wirkung ermöglichen. So kann beispielsweise mittels einer Aufweitung, Stauchung und/oder Teleskopierung auch bei erleichterter Anordnung des Magnetfeldleitelementes an der Wasserfilterpatrone eine maximale Magnetfeld leitende Wirkung bereitgestellt werden.

In eine weiter bevorzugten Ausführungsform kann ein Magnetfeldleitelement z. B. in der Form einer Beschichtung in und/oder an der Wasserfilterpatrone angebracht und/oder aufgebracht sein. Damit kann eine vergleichsweise dünnschichtige und damit platz- bzw. raumsparende Ausführung realisiert werden. Insbesondere vorteilhaft können hierbei bereits bestehende Strukturen für die Filterpatrone bzw. filterpatronenseitige Anschlusselemente und/oder komplementäre Filteranschlusselemente, insbesondere tankseitige Filteranschlusselemente unverändert beibehalten werden.

Auch im Hinblick auf die Anordnung eines Magnetfeldleitelementes an der Filterpatrone können sich bei der Herstellung Vorteile ergeben. So kann z. B., eine Trennschicht vorgesehen sein, sodass keine kontaktbedingten, negativen Auswirkungen auf das durch die Wasserfilterpatrone aufzubereitende und/oder aufbereitete Wasser verursacht werden können. Zur Bereitstellung einer Trennschicht kann ein solches Magnetfeldleitelement beispielsweise umspritzt werden. So können das Magnetfeldleitelement und/oder die Trennschicht z. B. als integraler Teil im Filtergehäuse, also dem Gehäuse der Filterpatrone, eingearbeitet sein. Insbesondere vorteilhaft im Hinblick auf eine Kontaktvermeidung mit Wasser ist es dabei, wenn das Magnetfeldleitelement vollständig ummantelt ist.

Wenn das Magnetfeldleitelement bereits vor der Einbringung in die Wasserfilterpatrone mit einer Trennschicht versehen ist, erhöht dies die potentiellen Anordnungsmöglichkeiten des Magnetfeldleitelementes in und/oder an der Wasserfilterpatrone. Insbesondere kann es dann auch als separat hergestelltes Teil in und/oder an der Wasserfilterpatrone angeordnet werden bzw. mit dieser verbunden werden. Auch austauschbar, z.B. i. d. F. eines Wechselelementes.

In einer bevorzugten Ausführungsform kann das Magnetfeldleitelement im Bereich des filterseitigen Tankanschlusselementes angeordnet sein. Bevorzugt wird hierbei eine Anordnung im und/oder am Filtergehäuse, zu dem auch das filterseitige Tankanschlusselement zählt. Unter dem Begriff "Bereich" wird z. B. auch eine Anordnung verstanden, die beispielsweise hinter einer Wandung des Filters und/oder des Tanks und/oder des wasserführenden Gerätes liegt. Wesentlich ist dabei, dass die Magnetfeld leitende bzw. konzentrierende Eigenschaft zur Verbesserung einer Kommunikation zwischen Antennen vorteilhaft genutzt werden kann.

Je nach Ausführungsform des filterseitigen Tankanschlusselementes und/oder eines komplementären tankseitigen Filteranschlusselementes und/oder der Anordnung der Antenne des jeweiligen elektronischen Kommunikationselementes kann sich eine Anordnung des Magnetfeldleitelementes insbesondere radial innerhalb oder auch außerhalb der einen oder anderen Antenne anbieten.

Ein radial innerhalb zumindest der Antenne des an der Wasserfilterpatrone angeordneten elektronischen Kommunikationselementes angeordnetes Magnetfeldleitelement kann beispielsweise so ausgebildet werden, dass es vorzugsweise auch sehr nahe an die Antenne des komplementären elektronischen Kommunikationselementes an einem tankseitigen Filteranschlusselement heranreicht. Und/oder auch an eine Antenne, die in und/oder an einem Gerät angeordnet ist, in welches ein solcher Wassertank zu dessen Betrieb einzusetzen ist.

Ein außerhalb der Antenne des filterseitig angeordneten, elektronischen Kommunikationselementes angeordnetes Magnetfeldleitelement kann den Vorteil einer noch besseren Abschirmung gegen magnetische Strahlung nach außen hin bieten. Insbesondere vorteilhaft kann es daher sein, sowohl innerhalb als auch außerhalb der Antenne des am Wasserfilter angeordneten elektronischen Kommunikationselementes ein Magnetfeldleitelement in kombinatorischer Wirkung sowohl im Hinblick auf Konzentration als auch auf Abschirmfunktion vorzusehen.

In einer besonders bevorzugten Ausführungsform kann das Magnetfeldleitelement im Bereich einer Wasserauslassöffnung der Wasserfilterpatrone angeordnet sein. Dies ist insbesondere dann vorteilhaft, wenn die Wasserauslassöffnung im Bereich des filterseitigen Tankanschlusselementes ausgebildet ist. Beispielsweise kann in einem solchen Ausführungsbeispiel das filterseitige Tankanschlusselement auch eine Trennung zwischen in einem Wassertank vorzuhaltendem, von der Wasserfilterpatrone aufzubereitendem Roh- bzw. Frischwasser und dem durch die Wasserfilterpatrone aufbereiteten Wasser bewirken. Der Einlass in die Wasserfilterpatrone kann dabei durch wenigstens eine am Filtergehäuse vorgesehene Wassereinlassöffnung realisiert werden. Bevorzugt ist diese bezogen auf das Wasserniveau bei eingesteckter Filterpatrone vergleichsweise tief angeordnet, z. B. in etwa auf Höhe einer Wasserauslassöffnung aus der Wasserfilterpatrone, sodass möglichst der gesamte Tankinhalt durch die Wasserfilterpatrone entleert werden kann.

Weiter wird ein Wassertank vorgeschlagen, welcher ein Tankgehäuse, eine Tankauslassöffnung und ein tankseitiges Filteranschlusselement umfasst, wobei ein Magnetfeldleitelement vorgesehen ist. Bevorzugt kann auch ein elektronisches Kommunikationselement mit Antenne vorgesehen sein. Bezüglich der Funktionsweise dieses Magnetfeldleitelementes gilt sinngemäß das Gleiche, wie bereits oben für das bezüglich der Wasserfilterpatrone beschriebene Magnetfeldleitelement. Auch dieses Magnetfeldleitelement dient somit zur Verbesserung der Kommunikation zwischen zwei komplementären elektronischen Kommunikationselementen. Diese Kommunikationselemente können einerseits an einem Wassertank vorgesehen sein und andererseits an einer zum Anschluss an einen solchen Wassertank vorgesehene Wasserfilterpatrone. Insbesondere kann das komplementäre elektronische Kommunikationselement auch an einem wasserführenden Gerät vorgesehen sein, an welches der betreffende Wassertank anzuschließen ist, insbesondere zum Betrieb eines derartigen Geräts, z. B. einer Getränkemaschine. Dadurch kann das wasserführende Gerät entweder direkt mit der Wasserfilterpatrone kommunizieren und/oder gegebenenfalls auch über den Tank. Eine solche Getränkemaschine kann beispielsweise eine Espressomaschine, ein Kaffeevollautomat oder dergleichen sein.

Bevorzugt kann das Magnetfeldleitelement im und/oder am tankseitigen Filteranschlusselement und/oder an einem tankseitigen Geräteanschlusselement angeordnet sein. Wie bereits zu dem oben bezüglich der Wasserfilterpatrone beschriebenen Magnetfeldleitelement erläutert, kann durch dessen Anordnung möglichst nahe an einer betreffenden Antenne für ein elektronisches Kommunikationselement eine optimale Konzentrierung für das mit dieser Antenne zusammenwirkende Magnetfeld und damit eine massive Verbesserung der Datenkommunikation mit einem entsprechend korrespondierenden, elektronischen Kommunikationselement an einer Wasserfilterpatrone und/oder an einem Gerät, mit welchem der Wassertank verbunden werden kann, bewirkt werden.

Als insbesondere vorteilhaft wird daher eine Anordnung eines tankseitigen Magnetfeldleitelementes in Bezug auf ein filterseitiges Magnetfeldleitelement, bzw. umgekehrt, in möglichst geringem Abstand zueinander vorgeschlagen. Hierzu können in einer möglichen Ausführung das tankseitige und das filterseitige Magnetfeldleitelement bei eingesteckter Wasserfilterpatrone so zueinander ausgerichtet sein, dass deren Stirnseiten nahe aneinander positioniert sind, insbesondere einander gegenüberliegend positioniert sind. Anhand eines radialen Versatzes können das tankseitige und das filterseitige Magnetfeldleitelement axial überlagert angeordnet und damit die radiale Magnetfeld leitende Wirkung weiter verbessert werden. Sinngemäß das gleiche gilt auf eine Anordnung des tankseitigen Magnetfeldleitelementes in Bezug auf ein geräteseitiges Magnetfeldleitelement, bzw. auch in Bezug auf eine mögliche Anordnung eines geräteseitigen Magnetfeldleitelementes zu einem filterseitigen Magnetfeldleitelement.

Insbesondere vorteilhaft kann dabei die Anordnung eines Magnetfeldleitelementes im Bereich einer Wasserauslassöffnung des Wassertanks angeordnet sein. Besonders bevorzugt ist diese Wasserauslassöffnung des Wassertanks zum Anschluss an ein wasserführendes Gerät, wie z. B. eine Getränkeaufbereitungsmaschine, vorgesehen. In diesem Fall kann mit dem Magnetfeldleitelement die Kommunikation zwischen einem am Tank und/oder an einer darin eingesteckten Wasserfilterpatrone angeordneten Kommunikationselement mit Antenne und einem am wasserführenden Gerät angeordneten elektronischen Kommunikationsmittel mit Antenne entsprechend verbessern.

Auch eine Reduzierung in der Abgabe magnetischer, insbesondere elektromagnetischer Strahlung im Hinblick auf EMV-Verträglichkeit kann damit bewirkt werden. Des Weiteren kann eine Reduzierung störender magnetischer Einflüsse von Seiten des wasserführenden Gerätes auf diese Kommunikationsstrecke mit einem solchen Magnetfeldleitelement erreicht werden. Zum Beispiel von einem Mahlwerk oder anderen vergleichsweise starke magnetische Strahlung verursachenden und abgebenden Magnetquellen.

Weiter wird ein wasserführendes Gerät vorgeschlagen, z. B. eine Getränkemaschine, mit einem maschinenseitigen Tankanschlusselement zum Anschluss an einen Wassertank, insbesondere an ein tankseitiges Geräteanschlusselement, sowie mit einem elektronischen Kommunikationsmittel mit Antenne, wobei ein Magnetfeldleitelement vorgesehen ist. Auch für dieses Magnetfeldleitelement gelten sinngemäß die gleichen funktionalen und strukturellen Erläuterungen, wie bereits oben bezüglich der Wasserfilterpatrone und des Wassertanks dargelegt.

Als insbesondere vorteilhaft wird es auch hier angesehen, wenn das Magnetfeldleitelement im Bereich des geräteseitigen Tankanschlusselementes angeordnet ist, da damit eine möglichst enge bzw. geschlossene Magnetfeldlinienführung bewirkt werden kann. Dies gilt im Übrigen für alle Ausführungsformen.

Weiter wird ein Magnetfeldleitelement für eine Wasserfilterpatrone und/oder einen Wassertank und/oder ein wasserführendes Gerät, insbesondere eine Getränkemaschine, vorgeschlagen, wobei das Magnetfeldleitelement einen zur Verbindung mit einer Wasserfilterpatrone und/oder einem Wassertank und/oder einem wasserführenden Gerät, insbesondere einer Getränkemaschine, vorgesehenen Anschluss umfasst. In einer möglichen Ausführungsform kann dieser Anschluss als Einsteckanschluss ausgebildet sein. Damit kann das Magnetfeldleitelement z. B. in der Form eines Nachrüstelements ausgebildet sein. Ein solches kann z. B. zur Verbesserung der Kommunikation zwischen zwei komplementären Kommunikationselementen mit Antennen beitragen. Insbesondere vorteilhaft kann dies auch für im Markt und/oder im Betrieb befindliche Kombinationen nachgerüstet werden.

Ein weiterer Vorteil kann darin gesehen werden, dass das Magnetfeldleitelement als Wechselelement ausgebildet sein kann. Dies gilt insbesondere vorteilhaft für eine Anordnung an einer Wasserfilterpatrone. Wenn eine solche verbraucht ist, kann ein austauschbar daran anordenbares Magnetfeldleitelement aus dieser verbrauchten Wasserfilterpatrone entnommen und in eine neue Wasserfilterpatrone in material- und kostensparender und umweltfreundlicher Weise eingesetzt und wiederverwendet werden.

In einer anderen vorteilhaften Ausführungsform kann der Anschluss als Schiebe- und/oder Steck-, insbesondere als Einschiebe- und/oder Aufschiebe- und/oder Aufsteck- und/oder Klemmanschluss ausgebildet sein. Auch für diese Ausführungsformen gelten sinngemäß die gleichen Möglichkeiten bezüglich Ausbildung, Anordnung und Vorteile, wie oben zum Einsteckanschluss dargelegt. Zusätzlich kann diese Aufschiebe- und/oder Aufsteck- und/oder Klemmanschluss-Version auch einen EMV-Schutz für die betreffende Kommunikationsstrecke durch Reduzierung nach außen austretender magnetischer Strahlung darstellen. In einer weiter bevorzugten Ausführungsform kann diese Ausführungsform auch mit der oben beschriebenen Einsteckanschlussausführung kombiniert werden.

In den nachfolgend beschriebenen Zeichnungen werden vorteilhafte Ausführungen anhand der Figuren näher erläutert.

Im Einzelnen zeigen:
- Figur 1: eine schematische, ausschnittsweise Schnittdarstellung eines wasserführenden Gerätes mit geräteseitigem Tankanschluss, eines Wassertanks mit tankseitigem Geräteanschlusselement und tankseitigem Filteranschlusselement sowie eine Wasserfilterpatrone mit filterseitigem Tankanschlusselement,
- Figuren 2 und 3: ausschnittsweise Schnittdarstellungen einer Wasserfilterpatrone mit für verschiedene Ausführungsformen beispielhaft dargestellten Magnetfeldleitelementen, und
- Figuren 4 bis 6: ausschnittsweise Schnittdarstellungen durch einen Wassertank im Bereich dessen tankseitiger Geräte- und Filteranschlusselemente sowie daran angeschlossene, geräteseitige Tankanschlusselemente und mit filterseitigem Tankanschlusselement angeschlossene Wasserfilterpatronen, mit verschiedenen Ausführungsformen und Anordnungen von Magnetfeldleitelementen.

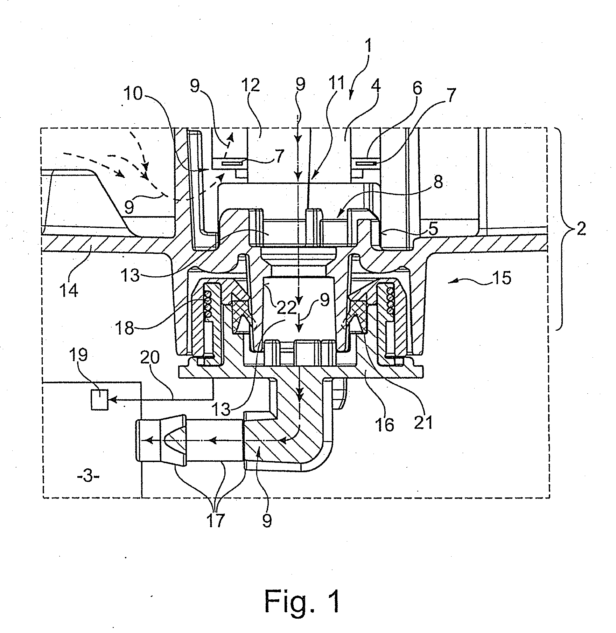

Als Gesamtüberblick zeigt die schematische Schnittdarstellung gemäß Figur 1 ausschnittsweise eine Wasserfilterpatrone 1, einen Wassertank 2 und ganz allgemein ein wasserführendes und/oder wasseraufbereitendes Gerät 3, welches insbesondere eine Getränkemaschine sein kann, wie beispielsweise eine Espressomaschine, ein Kaffeevollautomat oder dergleichen.

Zum Betrieb eines solchen wasserführenden und/oder wasseraufbereitenden Gerätes 3 sind üblicherweise zur Aufnahme von vorzuhaltendem Frisch- bzw. Rohwasser vorgesehene Wassertanks 2 maschinenseitig angeordnet. Zum Schutz des betreffenden Gerätes, insbesondere deren wasserführenden und wasseraufbereitenden Komponenten, sowie zur geschmacklichen Verbesserung der mittels des betreffenden Gerätes zu- oder aufbereitenden Getränke ist regelmäßig die Verwendung von Wasserfilterpatronen vorgesehen.

Das dem wasserführenden Gerät zuzuführende Wasser wird üblicherweise im Durchflussverfahren aus dem Wassertank 2 entnommen, über eine bezüglich des minimalen Flüssigkeitsniveaus möglichst tiefliegend an der Filterpatrone 1 ausgebildeten Wassereinlassöffnung 10 in die Wasserfilterpatrone eingeleitet, über eine darin angeordnete Filterstrecke, zum Beispiel ein Filterbett 12, zur Aufbereitung des Roh- bzw. Frischwassers geführt und über eine, ebenfalls üblicherweise möglichst tiefliegende Wasserauslassöffnung 11 aus dieser herausgeführt. Besonders vorteilhaft kann eine solche Wasserauslassöffnung 11 innerhalb eines filterseitigen Tankanschlusselementes 5 der Wasserfilterpatrone 1 ausgebildet sein. Damit kann ein filterseitiges Tankanschlusselement 5 im an ein tankseitiges Filteranschlusselement 8 angeschlossenen Zustand eine Trennung zwischen Frisch- bzw. Rohwasserbereich im Inneren des Wassertanks 2 und dem Filtratbereich, also dem Bereich, in welchem das durch die Wasserfilterpatrone aufbereitete Wasser aus dieser heraus und dem wasserführenden bzw. wasseraufbereitenden Gerät zugeführt wird, trennen.

Im Detail zeigt nun die Figur 1 eine ausschnittsweise Schnittdarstellung einer Wasserfilterpatrone 1, umfassend ein Filtergehäuse 4, ein filterseitiges Tankanschlusselement 5, ein elektronische Kommunikationselement 6 mit Antenne 7. Damit kann ganz allgemein mit einem komplementären elektronischen Kommunikationselement, wie z.B. mit 19 dargestellt, ein Datenaustausch, also eine elektronische Kommunikation durchgeführt werden. Beispielsweise kann so geräteseitig geprüft werden, ob eine für den betreffenden Betrieb vorgesehene, korrekte Filterpatrone 1 eingesetzt ist.

Der beispielhaft in gestrichelter Linie mit 9 bezeichnete Wasserstrom tritt durch eine am Filtergehäuse 4 nahe dem filterseitigen Tankanschlusselement 5 ausgebildeten Wassereinlassöffnung 10 in die Filterpatrone ein, strömt über ein Filterbett 12 und tritt an einer vorzugsweise zentralen, bodenseitigen Wasserauslassöffnung 11 wieder aus der Wasserfilterpatrone 1 aus.

Im Anschluss daran läuft das durch die Wasserfilterpatrone 1 aufbereitete Wasser als Wasserstrom 9 durch eine im Tankboden 14 innerhalb des tankseitigen Filteranschlusselementes 8 ausgebildete und dieses mit einem tankseitigen Geräteanschlusselement 15 flüssigkeitsleitend verbindende Tankauslassöffnung 13 in ein geräteseitiges Tankanschlusselement 16 und weiter über eine Leitung 17 zum wasserführenden bzw. wasseraufbereitenden Gerät 3.

Am geräteseitigen Tankanschlusselement 16 sind beispielhaft und schematisch noch Wicklungen einer Antenne 18 eines, in diesem Fall ebenfalls beispielhaft am wasserführenden Gerät 3 angeordneten, elektronischen Kommunikationselementes 19 dargestellt, welche über eine symbolische Leitung 20 miteinander verbunden sind.

Eine Dichtung 21 ist so am geräteseitigen Tankanschlusselement angeordnet, das ein am Tankboden außen angeordneter, tankseitiger Geräteanschlussstutzen 22 durch Verbinden des tankseitigen Geräteanschlusselementes 15 mit dem geräteseitigen Tankanschlusselement 16 die so gebildete Strömungsführung für den Wasserstrom 9 nach außen hin abdichtet.

Während einer über die beiden Antennen 18 und 7 stattfindenden Kommunikation der beiden Kommunikationselemente 19 und 6 bilden sich die Feldlinien eines dabei auftretenden, magnetischen Feldes, ohne Berücksichtigung durch das aufzubereitende und aufbereitete Wasser verursachte Störungen, aufgrund der ziemlich ähnlichen Permeabilität der in diesen Bereichen vorhandenen, räumlichen Strukturen entsprechend der jeweils vorherrschenden Polaritäten im Wesentlichen gleichmäßig aus. Jene Anteile an Feldlinien, welche nicht oder zumindest nicht im Wesentlichen zur Übertragung zwischen den beiden Antennen teilhaben, können nach außen hin Störungen verursachen und liefern auch keinen Beitrag für die Kommunikation, zumindest keinen wesentlichen.

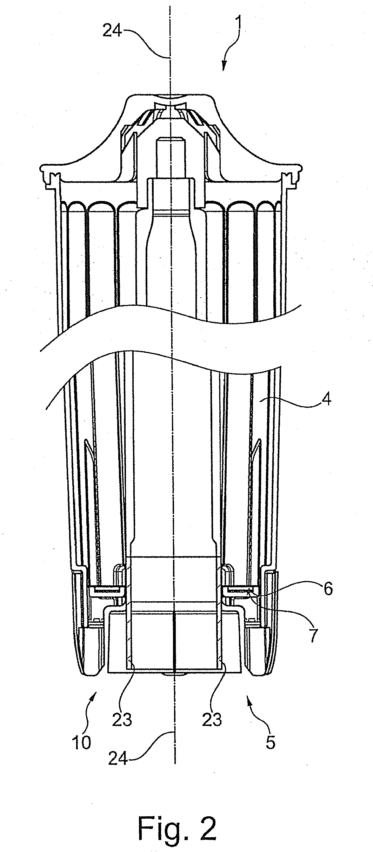

Die Figur 2 zeigt beispielhaft eine Wasserfilterpatrone 1 mit Filtergehäuse 4, Wassereinlassöffnung 10, filterseitigem Tankanschlusselement 5 und einem in dessen Bereich angeordneten Magnetfeldleitelement 23. In diesem Beispiel ist das Magnetfeldleitelement 23 radial innerhalb einer Antenne 7 eines elektronischen Kommunikationselementes 6 angeordnet. Durch eine axiale Ausrichtung in Bezug auf eine Längsachse 24 der Wasserfilterpatrone werden in diesem Bereich auftretende magnetische Feldlinien um dieses Magnetfeldleitelement, und insbesondere in diesem zu einem deutlich verstärkten Magnetfeld gebündelt. Bei einer Ausbildung des Magnetfeldleitelementes 23 im Bereich der Antenne 7, hin zur anschlussseitigen Stirnseite der Wasserfilterpatrone bzw. dessen filterseitigem Tankanschlusselement 5 kann somit eine gezielte Magnetfeldführung realisiert werden, insbesondere hin in Richtung einer Antenne eines komplementären Kommunikationselementes, wie beispielsweise der Antenne 18 des geräteseitigen, elektronischen Kommunikationselementes 19. Damit kann eine wesentliche Verbesserung in der Kommunikation zwischen diesen beiden Antennen bzw. den zugehörigen Kommunikationselementen bewirkt werden.

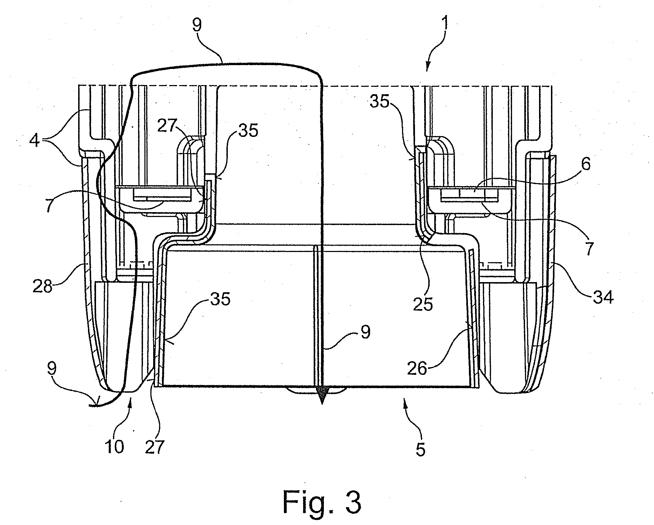

Eine weitere Ausführungsform eines Magnetfeldleitelementes 34 ist auf der rechten Hälfte der Darstellung der Figur 3 beispielshaft gezeigt. Es weist eine Längserstreckung auf, vorzugsweise erstreckt diese sich in Längsrichtung von der anschlussseitigen Stirnseite der Filterpatrone in Richtung der Antenne 7 des Kommunikationselementes 6. Weiter vorteilhaft kann diese Längserstreckung über die Antenne 7 hinaus reichen. Damit kann einerseits eine bessere Magnetfeldleitung zwischen dieser Antenne 7 und einer entsprechend komplementären Antenne bewirkt werden. Zusätzlich bietet der außerhalb der im Wesentlichen direkten Kommunikationsstrecke zwischen den Antennen liegende Abschnitt dieses Magnetfeldleitelementes 35 eine Abschirmwirkung, sowohl nach innen als nach außen. In bevorzugter Weise ist dieses Magnetfeldleitelement 34 hülsenförmig ausgebildet. Das heißt, es ist rundherum um diesen Anschlussbereich der Wasserfilterpatrone deren Filtergehäuse 4 angeordnet und/oder aufgebracht. Mögliche Ausführungsformen sind hierfür ein- und/oder aufsteckbare Magnetfeldleitelemente und/oder Beschichtungen. Gleiches kann auch für die hier als beispielhaft beschriebenen, im Inneren der Wasserfilterpatrone 1 angeordneten Magnetfeldleitelemente 25 bis 28 der Fall sein, inklusive einer Einsteckmöglichkeit.

Zur Vermeidung von nachteiligen Kontaktwirkungen eines Magnetfeldleitelementes auf das von der Wasserfilterpatrone 1 aufzubereitende Wasser ist hier wiederum beispielhaft für alle möglichen Ausführungsformen eine Trennschicht 35 vorgesehen. Beispielhaft für eine derartige Trennschicht sind die Trennschichten 35 an den Magnetfeldleitelementen 25 und 27 dargestellt.

Die Figur 3 zeigt im Weiteren eine ausschnittsweise Schnittdarstellung eines filterseitigen Tankanschlusselementes 5 einer Wasserfilterpatrone 1. In der rechten Bildhälfte ist wiederum ein elektronisches Kommunikationselement mit Antenne 7 gezeigt, welche Antenne beispielsweise ringförmig ausgebildet ist und daher auch an der linken Bildhälfte in ihrer Schnittdarstellung erkennbar ist.

Weiterhin sind hier beispielhaft mehrere mögliche Ausführungsformen von Magnetfeldleitelementen 25 bis 28 dargestellt. Das Magnetfeldleitelement 25 ist, wie das Ausführungsbeispiel in der Figur 2, radial innerhalb der Antenne 7 sich axial erstreckend in der Wasserfilterpatrone angeordnet. Damit kann auch mit diesem eine Magnetfeldlinienkonzentration innerhalb der Wasserfilterpatrone 1 in dessen Umgebung bewirkt werden. Dieses Magnetfeldleitelement 25 kann beispielsweise mit einem weiteren, ebenfalls sich axial in Längsrichtung erstreckend ausgebildeten Magnetfeldleitelement 26 zusammenwirken, welches in diesem Beispiel sich radial weiter außen im Wasserfiltergehäuse 4 angeordnet befindet als das Magnetfeldleitelement 25. Der Grund hierfür kann beispielsweise in einer radialen Erweiterung der Strukturen im Anschlussbereich sein. Für eine vergleichsweise leichte Anordnung können diese beiden Magnetfeldleitelemente beispielsweise jeweils zwei hülsenförmige Ausführungsformen darstellen, welche an den betreffenden Positionen innerhalb der Filterpatrone angeordnet werden können. Zum Beispiel durch Aufstecken auf ein Element zum Auslass des von der Wasserfilterpatrone aufbereiteten Wassers.

Eine weitere Ausführungsform ist auf der linken Bildhälfte durch das Magnetfeldleitelement 27 gezeigt, welche sich von der Antenne bis zum stirnseitigen Ende des filterseitigen Tankanschlusselementes erstreckt. Diese Ausführungsform hat den Vorteil, dass eine durchgehende Magnetfeldlinienleitung in diesem Bereich möglich ist. Ausgebildet kann dies beispielsweise durch eine Beschichtung eines entsprechenden Innenbereichs der Wasserfilterpatrone sein, oder auch durch eine entsprechend geformte Hülse.

Eine weitere mögliche Ausführungsform ist durch das Magnetfeldleitelement 28 gezeigt, welches radial außerhalb der Antenne 7 in und/oder an einem Bereich des Filterpatronengehäuses 4 angeordnet ist. Damit kann einerseits eine Abschirmung innerhalb der Filterpatrone auftretender, magnetischer Feldlinien nach außen hin bewirkt werden, und andererseits eine Abschirmung möglicherweise von außen herrührender magnetischer Feldlinien, die andernfalls gegebenenfalls die Kommunikation der Antennen stören könnte.

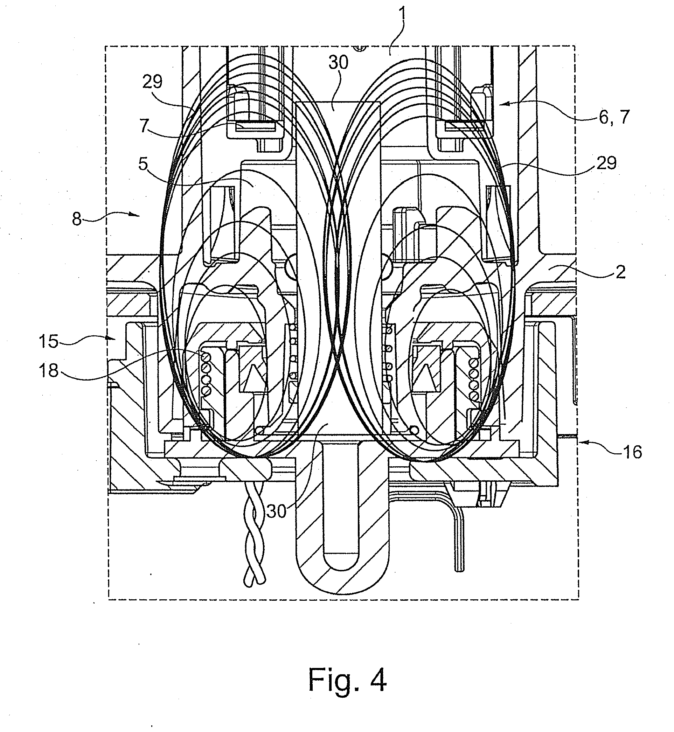

In der Abbildung gemäß Figur 4 ist eine weitere beispielhafte Ausführungsform schematisch und ausschnittsweise dargestellt. Sie zeigt einen Tank 2 mit tankseitigem Filteranschlusselement 8 und einer daran mit ihrem filterseitigen Tankanschlusselement 5 angeschlossene Wasserfilterpatrone 1 und ein tankseitigen Geräteanschlusselement 15 und einem daran angeschlossenen geräteseitigen Tankanschlusselement 16. In dieser beispielhaft dargestellten Ausführungsform ist ein Magnetfeldleitelement 30 im zentralen Bereich von Wasserfilterpatronen, Wassertank und den jeweiligen Anschlusselementen 5, 8 sowie 15, 16 gezeigt. Zur Veranschaulichung der Wirkung dieses Magnetfeldleitelementes 30 sind magnetische Feldlinien 29 eingezeichnet, die zwischen den beiden Antennen 7 und 18 verlaufen. Das Magnetfeldleitelement 30 bewirkt eine Konzentration der Magnetfeldlinien in seinem Inneren. Damit kann das Magnetfeld in diesem Bereich deutlich konzentriert bzw. verstärkt werden. Zusätzlich können durch diesen Effekt störende Einflüsse von außen her reduziert werden. Auch Störungen, wie sie beispielsweise durch vom Wasser bedingte Verstimmungen hervorgerufen werden, können damit deutlich in ihrer Auswirkung reduziert werden.

Dieses Magnetfeldleitelement kann beispielsweise im Bereich der Wasserausleitung aus dem Tank angeordnet sein, z. B. in die Tankauslassöffnung 13 eingesetzt.

Zur Vermeidung von Undichtigkeiten kann ein Dichtmittel zwischen dem Magnetfeldleitelement 30 und der Tankauslassöffnung 13 angeordnet werden. Eine solche Ausführungsform kann beispielsweise als Einsteckverbindung realisiert sein. Das Magnetfeldleitelement selbst ist vorzugsweise in der Form einer Hülse ausgebildet, sodass einerseits eine optimale Magnetfeldleitung in der Wandung der Hülse stattfinden kann und andererseits eine flüssigkeitsdurchleitende Verbindung zwischen Tankauslass und geräteseitigem Wasseranschluss hergestellt werden kann. In der Tankauslassöffnung kann zusätzlich ein Ventil vorgesehen sein, welches bei nicht mit einem geräteseitigen Tankanschluss verbundenem tankseitigem Geräteanschluss den Tank verschließt. Dies gilt im Übrigen für alle möglichen Ausführungen von hier beschriebenen Wassertanks.

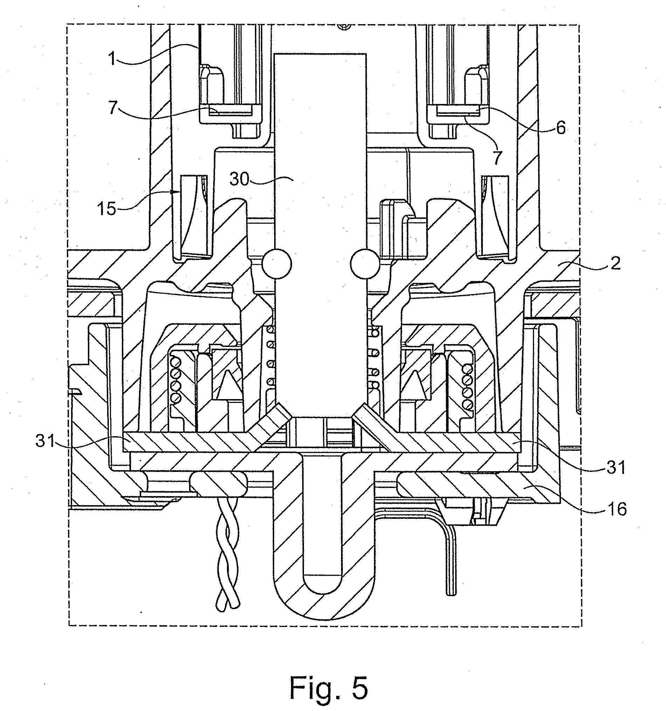

Die Figur 5 zeigt den gleichen Aufbau wie die Figur 4. Zusätzlich zu dem in der Figur 4 gezeigten Magnetfeldleitelement 30 ist hier ein weiteres Magnetfeldleitelement 31 im Wesentlichen in der Form einer Scheibe bzw. eines Ringes dargestellt. Es ist an der von der geräteanschlussseitigen Antenne 18 bezüglich des von seinen magnetischen Feldlinien 29 gebildeten Magnetfeldes außerhalb liegenden Seite angeordnet. Damit kann es einerseits in diese Richtung abstrahlende Feldlinien einfangen und über eine mögliche Kontaktstelle mit dem Magnetfeldleitelement 30 in dieses das so gebildete Magnetfeld weiter verstärkend einleiten. Ein weiterer Effekt ist auch hier eine zusätzliche Abschirmung sowohl nach innen als auch nach außen. Das Magnetfeldleitelement 31 kann sowohl zusätzlich zum Magnetfeldleitelement 30 vorgesehen sein als auch in einer möglichen alternativen Ausführungsform ohne dieses.

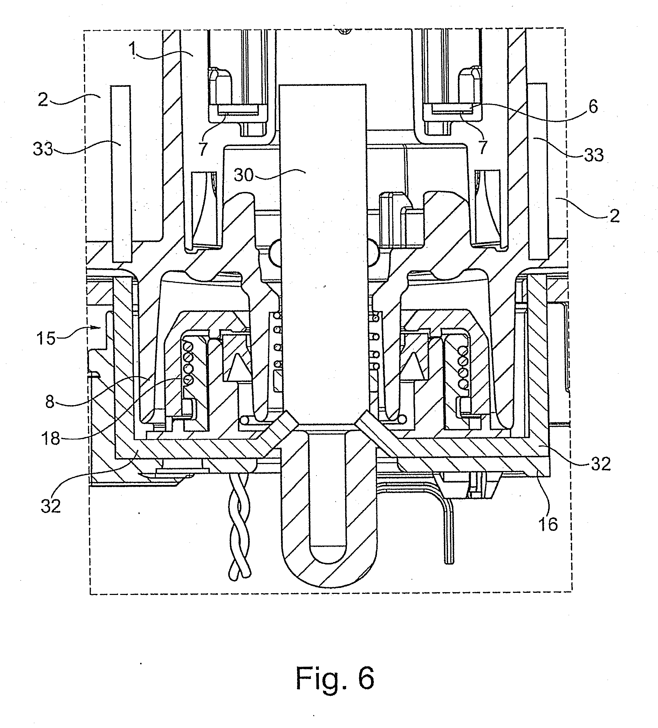

Die in der Figur 6 dargestellte Ausführungsform zeigt eine Abwandlung von der in der Figur 5 gezeigten Ausführung. So ist beispielsweise das in der Figur 5 gezeigte Magnetfeldleitelement 31 hier zu einem topfförmig ausgebildeten Magnetfeldleitelement 32 abgeändert. Dieses umschließt mit seiner äußeren hülsenförmigen Wandung das tankseitige Filteranschlusselement 8 und die, entsprechend der dargestellten Verbindung mit dem geräteseitigen Tankanschlusselement 16, darin angeordnete Antenne 18 für das geräteseitige, elektronische Kommunikationselement (vgl. Figur 1). Durch diese topfförmige Ausbildung des Magnetfeldleitelementes 32 kann der gesamte Innenraum des geräteseitigen Tankanschlusselementes 16 magnetisch abgeschirmt werden. Dies kann eine weitere Verbesserung für die Kommunikation zwischen den beiden Antennen 18 und 7 bewirken. Entsprechendes gilt auch für die Verbesserung in der elektromagnetischen Störungsreduzierung.

Ein weiteres Magnetfeldleitelement 33 ist hier beispielhaft im Tank 2 angeordnet. Es fluchtet vorzugsweise mit der Wandung des topfförmigen Magnetfeldleitelementes 32 im geräteseitigen Tankanschlusselement 16 und erstreckt sich ebenfalls vorzugsweise bis die Nähe der Höhe, in welcher die Antenne 7 des filterseitigen elektronischen Kommunikationselementes 6 im in den Tank eingesteckten Zustand positioniert ist. Weiter vorzugsweise erstreckt sich das Magnetfeldleitelement 33 noch ein Stück weiter in axialer Richtung über dieses hinweg aus, sodass einerseits ein Austritt von Magnetfeldlinien in diesen Bereich zumindest eingedämmt werden kann und andererseits auch eine Abschirmung gegen magnetische Störung von außen bewirkt werden kann.

In Zusammenwirkung mit an einer Wasserfilterpatrone 1 vorgesehenen Magnetfeldleitelementen 25 bis 28, wie sie beispielsweise in den Figuren 2 und 3 dargestellt und hierzu oben bereits beschrieben wurden, kann eine weitere Verbesserung in der Führung von magnetischen Feldlinien und damit der Kommunikation zwischen Antennen elektronischer Kommunikationsmittel, wie sie beispielsweise durch die Antennen 7 und 18 und die elektronischen Kommunikationsmittel 6 und 19 hier beispielhaft beschrieben sind, bewirkt werden.

### Bezugszeichenliste:

- 1: Wasserfilterpatrone
- 2: Wassertank
- 3: wasserführendes Gerät
- 4: Filtergehäuse
- 5: filterseitiges Tankanschlusselement
- 6: elektronisches Kommunikationselement
- 7: Antenne
- 8: tankseitiges Filteranschlusselement
- 9: Wasserstrom
- 10: Wassereinlassöffnung
- 11: Wasserauslassöffnung
- 12: Filterbett
- 13: Tankauslassöffnung
- 14: Tankboden
- 15: tankseitiges Geräteanschlusselement
- 16: geräteseitiges Tankanschlusselement
- 17: Leitung
- 18: Antenne
- 19: elektronisches Kommunikationselement
- 20: Leitung
- 21: Dichtung
- 22: tankseitiger Geräteanschlussstutzen
- 23: Magnetfeldleitelement
- 24: Achse
- 25: Magnetfeldleitelement
- 26: Magnetfeldleitelement
- 27: Magnetfeldleitelement
- 28: Magnetfeldleitelement
- 29: magnetische Feldlinien
- 30: Magnetfeldleitelement
- 31: Magnetfeldleitelement
- 32: Magnetfeldleitelement
- 33: Magnetfeldleitelement
- 34: Magnetfeldleitelement
- 35: Trennschicht

## Patentansprüche

1. Wasserfilterpatrone (1) für den Einsatz in einen Wasservorratsstank (2) eines wasserführenden Gerätes (3), umfassend ein Filtergehäuse (4), ein filterseitiges Tankanschlusselement (5) und ein elektronisches Kommunikationselement (6) mit Antenne (7), **dadurch gekennzeichnet, dass** ein Magnetfeldleitelement (23) vorgesehen ist und dass das Magnetfeldleitelement (23) in einem Bereich der Wasserfilterpatrone (1) angeordnet ist, der sich zwischen der Antenne (7) des filterseitigen elektronischen Kommunikationselementes (6) und einer Stelle an der Wasserfilterpatrone (1) befindet, welche Stelle bei eingesetztem Zustand der Wasserfilterpatrone (1) in Richtung der Antenne (18) eines komplementären, zur Kommunikation mit dem filterseitigen Kommunikationselement (6) vorgesehenen, tankseitigen Kommunikationselement und/oder geräteseitigem Kommunikationselement (19) weist.

2. Wasserfilterpatrone (1) nach Anspruch 1, **dadurch gekennzeichnet, dass** das Magnetfeldleitelement (23, 25- 34) eine Struktur mit axialer Längserstreckung aufweist, insbesondere eine stiftförmige, fadenförmige oder dergleichen.

3. Wasserfilterpatrone (1) nach einem der Ansprüche 1 bis 2, **dadurch gekennzeichnet, dass** das Magnetfeldleitelement (23, 25- 34) oder mehrere Magnetfeldleitelemente (23, 25- 34), im Querschnitt betrachtet, eine wenigstens teilweise ringförmige Magnetfeldleit-Struktur ausbilden, insbesondere in der Art eines Käfigs.

4. Wasserfilterpatrone (1) nach einem der Ansprüche 1 bis 3, **dadurch gekennzeichnet, dass** das Magnetfeldleitelement (23, 25- 34) hülsenförmig ausgebildet ist.

5. Wasserfilterpatrone (1) nach einem der Ansprüche 1 bis 4, **dadurch gekennzeichnet, dass** das Magnetfeldleitelement (23, 25- 34) als Beschichtung in und/oder an der Wasserfilterpatrone (1) ausgebildet ist.

6. Wasserfilterpatrone (1) nach einem der Ansprüche 1 bis 5, **dadurch gekennzeichnet, dass** eine Trennschicht (35) zwischen einem Magnetfeldleitelement (23, 25- 34) und einem wasserführenden Bereich vorgesehen ist.

7. Wasserfilterpatrone (1) nach einem der Ansprüche 1 bis 6, **dadurch gekennzeichnet, dass** das Magnetfeldleitelement (23, 25- 34) im Bereich des filterseitigen Tankanschlusselementes (5) angeordnet ist, insbesondere im und/oder am Filtergehäuse (4) .

8. Wasserfilterpatrone (1) nach einem der Ansprüche 1 bis 7, **dadurch gekennzeichnet, dass** das Magnetfeldleitelement (23, 25- 34) im Bereich einer Wasserauslassöffnung (11) der Wasserfilterpatrone (1) angeordnet ist.

9. Wassertank (2) zur Bevorratung von Trinkwasser für ein wasserführendes Gerät (3), insbesondere einer Getränkemaschine, umfassend ein Tankgehäuse, eine Tankauslassöffnung (13) und ein tankseitiges Filteranschlusselement (8), **dadurch gekennzeichnet, dass** ein Magnetfeldleitelement (30, 33) vorgesehen ist.

10. Wassertank (2) nach Anspruch 9, **dadurch gekennzeichnet, dass** das Magnetfeldleitelement (30, 33) im und/oder am tankseitigen Filteranschlusselement (8) und/oder an der Tankauslassöffnung (13) angeordnet ist.

11. Wassertank (2) nach einem der Ansprüche 9 oder 10 , **dadurch gekennzeichnet, dass** das Magnetfeldleitelement (30, 33) im Bereich eines tankseitigen Geräteanschlusselementes (15) angeordnet ist.

12. Wassertank (2) nach einem der Ansprüche 9 bis 11, **dadurch gekennzeichnet, dass** ein elektronisches Kommunikationselement mit Antenne vorgesehen ist.

13. Wasserführendes Gerät (3), insbesondere Getränkemaschine, mit einem Wassertank (2), mit einem maschinenseitigen Tankanschlusselement (16) zum Anschluss an den Wassertank (2), mit einem elektronischen Kommunikationsmittel (19) mit Antenne und mit einer in den Wassertank (2) eingesetzten Wasserfilterpatrone (1) **dadurch gekennzeichnet, dass** ein Magnetfeldleitelement (23, 25 - 34) in einem Bereich zwischen zwei Antennen (7, 18) angeordnet ist.

## Claims

1. A water filter cartridge (1) for use in a water storage tank (2) of a water-carrying appliance (3), comprising a filter housing (4), a filter-side tank connection element (5) and an electronic communication element (6) with aerial (7),
**characterized in that**
a magnetic field guiding element (23) is provided and **in that** the magnetic field guiding element (23) is arranged in a region of the water filter cartridge (1) which is located between the aerial (7) of the filter-side electronic communication element (6) and a place on the water filter cartridge (1), which place in the inserted state of the water filter cartridge (1), faces in the direction of the aerial (18) of a complementary tank-side communication element and/or equipment-side communication elements (19) provided for the communication with the filter-side communication element (6) .

2. The water filter cartridge (1) according to Claim 1, **characterized in that**
the magnetic field guiding element (23, 25-34) has a structure with axial longitudinal extension, in particular a pin-shaped, filament-shaped or similar.

3. The water filter cartridge (1) according to any one of the Claims 1 to 2,
**characterized in that**
the magnetic field guiding element (23, 25-34) or multiple magnetic field guiding elements (23, 25-34), viewed in the cross-section, form an at least partially annular magnetic field guiding structure, in particular in the manner of a cage.

4. The water filter cartridge (1) according to any one of the Claims 1 to 3,
**characterized in that**
the magnetic field guiding element (23, 25-34), is configured sleeve-like.

5. The water filter cartridge (1) according to any one of the Claims 1 to 4,
**characterized in that**
the magnetic field guiding element (23, 25-34) is configured as coating in and/or on the water filter cartridge (1).

6. The water filter cartridge (1) according to any one of the Claims 1 to 5,
**characterized in that**
a separating layer (35) is provided between a magnetic field guiding element (23, 25-34) and a water-carrying region.

7. The water filter cartridge (1) according to any one of the Claims 1 to 6,
**characterized in that**
the magnetic field guiding element (23, 25-34) is arranged in the region of the filter-side tank connection element (5), in particular in and/or on the filter housing (4).

8. The water filter cartridge (1) according to any one of the Claims 1 to 7,
**characterized in that**
the magnetic field guiding element (23, 25-34) is arranged in the region of a water outlet opening (11) of the water filter cartridge (1).

9. A water tank (2) for storing drinking water for a water-carrying appliance (3), in particular a beverage machine, comprising a tank housing, a tank outlet opening (13) and a tank-side filter connection element (8), **characterized in that**
a magnetic field guiding element (30, 33) is provided.

10. The water tank (2) according to Claim 9, **characterized in that**
the magnetic field guiding element (30, 33) is arranged in and/or on the tank-side filter connection element (8) and/or on the tank outlet opening (13).

11. The water tank (2) according to any one of the Claims 9 or 10,
**characterized in that**
the magnetic field guiding element (30, 33) is arranged in the region of a tank-side appliance connection element (15) .

12. The water tank (2) according to any one of the Claims 9 to 11,
**characterized in that**
an electronic communication element with aerial is provided.

13. A water-carrying appliance (3), in particular beverage machine, having a water tank (2), with a machine-side tank connection element (16) for connection to the water tank (2), having an electronic communication means (19) with aerial and having a water filter cartridge (1) inserted into the water tank (2), **characterized in that**
a magnetic field guiding element (23, 25-34) is arranged in a region between two aerials (7, 18).

## Revendications

1. Cartouche de filtre à eau (1) destinée à être insérée dans un réservoir de stockage d'eau (2) d'un dispositif de transport d'eau (3), ladite cartouche comprenant un boîtier de filtre (4), un élément de raccordement de réservoir côté filtre (5) et un élément de communication électronique (6) pourvu d'une antenne (7), **caractérisée en ce qu'**un élément conducteur de champ magnétique (23) est prévu et **en ce que** l'élément conducteur de champ magnétique (23) est disposé dans une zone de la cartouche de filtre à eau (1) qui est située entre l'antenne (7) de l'élément de communication électronique côté filtre (6) et un emplacement sur la cartouche de filtre à eau (1), lequel emplacement, lorsque la cartouche de filtre à eau (1) est insérée, pointe en direction de l'antenne (18) d'un élément de communication complémentaire côté réservoir et/ou d'élément de communication complémentaire côté dispositif (19) qui sont prévus pour communiquer avec l'élément de communication côté filtre (6).

2. Cartouche de filtre à eau (1) selon la revendication 1, **caractérisée en ce que** l'élément conducteur de champ magnétique (23, 25 à 34) présente une structure à extension longitudinale axiale, notamment en forme de broche, de fil ou similaire.

3. Cartouche de filtre à eau (1) selon l'une des revendications 1 à 2, **caractérisée en ce que** l'élément conducteur de champ magnétique (23, 25 à 34) ou une pluralité d'éléments conducteurs de champ magnétique (23, 25 à 34), vus en coupe transversale, forment une structure conductrice de champ magnétique au moins partiellement annulaire, notamment du type cage.

4. Cartouche de filtre à eau (1) selon l'une des revendications 1 à 3, **caractérisée en ce que** l'élément conducteur de champ magnétique (23, 25 à 34) est en forme de manchon.

5. Cartouche de filtre à eau (1) selon l'une des revendications 1 à 4, **caractérisée en ce que** l'élément conducteur de champ magnétique (23, 25 à 34) est conçu comme un revêtement dans et/ou sur la cartouche de filtre à eau (1).

6. Cartouche de filtre à eau (1) selon l'une des revendications 1 à 5, **caractérisée en ce qu'**une couche séparatrice (35) est prévue entre un élément conducteur de champ magnétique (23, 25 à 34) et une zone de transport d'eau.

7. Cartouche de filtre à eau (1) selon l'une des revendications 1 à 6, **caractérisée en ce que** l'élément conducteur de champ magnétique (23, 25 à 34) est disposé dans la zone de l'élément de raccordement de réservoir côté filtre (5), notamment dans et/ou sur le boîtier de filtre (4).

8. Cartouche de filtre à eau (1) selon l'une des revendications 1 à 7, **caractérisée en ce que** l'élément conducteur de champ magnétique (23, 25 à 34) est disposé dans la zone d'une ouverture de sortie d'eau (11) de la cartouche de filtre à eau (1).

9. Réservoir à eau (2) destiné à stocker de l'eau potable destiné à un dispositif de transport d'eau (3), en particulier une machine à boissons, ledit réservoir comprenant un boîtier de réservoir, une ouverture de sortie de réservoir (13) et un élément de raccordement de filtre côté réservoir (8), **caractérisé en ce qu'**un élément conducteur de champ magnétique (30, 33) est prévu.

10. Réservoir d'eau (2) selon la revendication 9, **caractérisé en ce que** l'élément conducteur de champ magnétique (30, 33) est disposé dans et/ou sur l'élément de raccordement de filtre côté réservoir (8) et/ou sur l'ouverture de sortie de réservoir. (13).

11. Réservoir d'eau (2) selon l'une des revendications 9 ou 10, **caractérisé en ce que** l'élément conducteur de champ magnétique (30, 33) est disposé dans la zone d'un élément de raccordement de dispositif côté réservoir (15) .

12. Réservoir d'eau (2) selon l'une des revendications 9 à 11, **caractérisé en ce qu'**un élément de communication électronique pourvu d'une antenne est prévu.

13. Dispositif de transport d'eau (3), en particulier machine à boissons, comprenant un réservoir d'eau (2), un élément de raccordement de réservoir côté machine (16) destiné au raccordement au réservoir d'eau (2), un moyen de communication électronique (19) pourvu d'une antenne et une cartouche de filtre à eau (1) insérée dans le réservoir d'eau (2), **caractérisé en ce qu'**un élément conducteur de champ magnétique (23, 25 à 34) est disposé dans une zone située entre deux antennes (7, 18) .
